# EUROPÄISCHE PATENTSCHRIFT

(11) **EP 0 778 457 B1**
(45) Veröffentlichungstag und Bekanntmachung des Hinweises auf die Patenterteilung: **13.06.2001**
(21) Anmeldenummer: 96810794.6
(22) Anmeldetag: 14.11.1996
(51) Int. Cl.: G01C 15/04

(54) **Vorrichtung zum Markieren eines Messpunktes**
Device for marking a measuring point
Dispositif pour marquer un point de mesure

(30) Priorität: 05.12.1995 CH 343295; 04.06.1996 CH 142196
(43) Veröffentlichungstag der Anmeldung: 11.06.1997
(73) Patentinhaber: Scarpellini, Felice, 6928 Manno (CH)
(72) Erfinder: Scarpellini, Felice, 6928 Manno (CH)
(74) Vertreter: Münch, Otto, Dipl.-Ing.

(56) Entgegenhaltungen:
- AT-A- 335 759
- CH-A- 449 984
- FR-A- 1 514 357

## Beschreibung

Auf Fussballfeldern müssen die aus geraden Linien und Kreisbögen bestehenden Markierungen periodisch erneuert werden. Dies geschieht, indem man an bestimmten Messpunkten Stäbe in den Boden treibt und zwischen jeweils zwei Stäben eine Schnur spannt, entlang welcher eine geradlinige Markierung auf dem Rasen angebracht wird, oder indem eine Schnur an einem Stab befestigt und mit deren Ende um den Stab herum ein Kreisbogen angezeichnet wird. Die Stäbe werden anschliessend wieder entfernt. Da sich die Markierungen auf dem Rasen mit der Zeit verschieben können, oder weil sie gelegentlich verwischen, müssen die Messpunkte zum Einstecken der Stäbe periodisch neu vermessen werden, was aufwendig ist.

Der vorliegenden Erfindung liegt die Aufgabe zugrunde, eine Vorrichtung der eingangs genannten Art anzugeben, welche diesen Nachteil nicht aufweist. Diese Aufgabe wird durch die Merkmalskombination der Ansprüche gelöst.

Nachfolgend werden Ausführungsbeispiele der Erfindung anhand der Zeichnung erläutert. Darin zeigt:
- Figur 1: Eine Seitenansicht der Vorrichtung,
- Figur 2: einen Längsschnitt längs der Linie II-II in Figur 1,
- Figur 3: einen Querschnitt längs der Linie III-III in Figur 2, und
- Figuren 4 und 5: zwei weitere Ausführungsbeispiele

Die Vorrichtung besteht aus einem kreiszylindrischen Rohr 1, einem Markierelement 2 und einer vorgespannten Zugfeder 3 aus nichtrostendem Stahl, die unten am Rohr 1 und oben am Markierelement 2 befestigt ist. Das Rohr 1 hat unten eine Abflachung 10 mit einem mittigen Längsschlitz 11. Dadurch kann das Rohr 1 leicht in den Boden eingetrieben werden. Der Längsschlitz erleichtert zudem das Einbringen konzentrisch zu einem genau vermessenen Geländepunkt. Benachbart der Abflachung 10 hat das Rohr 1 mindestens eine seitige Oeffnung 12, damit allenfalls eingedrungenes Wasser ablaufen und versickern kann. Dadurch wird verhindert, dass bei Frost Wasser im Rohr einfrieren, das Element 2 blockieren und das Rohr 1 sprengen kann. Die Oeffnungen 12 können auch zum Befestigen des unteren Federendes verwendet werden. Das Rohr 1 besteht vorzugsweise aus einer Aluminiumlegierung, aus nichtrostendem oder verzinktem Stahl oder aus Messing.

Das Element 2 besteht aus einem zylindrischen Schaft 20, dessen Aussendurchmesser nur geringfügig kleiner ist als der Innendurchmesser des Rohres 1, und einem einstückig daran angespritzten, flachen, scheibenförmigen Kopf 21. Das Element 2 besteht aus Kunststoff, vorzugsweise aus Polyamid. Es hat mindestens eine Längsnut 22, welche beabstandet vom unteren Ende in eine Umfangsnut 23 übergeht. Statt der Längsnut 22 kann auch ein Längsschlitz vorgesehen sein. Oben hat der Schaft 20 eine Querbohrung 24, um eine Schnur festzuknüpfen. Das Rohr 1 hat benachbart dem oberen Ende eine Körnung 13, die einen nach innen ragenden Vorsprung bildet, welcher in die Nuten 22, 23 eingreift. Damit wird einerseits eine bajonettartige Arretierung des Elementes 2 in der dargestellten angehobenen Endstellung erreicht, andererseits das Element 2 unverlierbar im Rohr 1 gehalten. Wird das Element 2 so gedreht, dass die Körnung 13 in die Längsnut 22 eingreift, so wird es durch die Feder 3 in die abgesenkte Stellung gezogen, in welcher der Kopf 21 am oberen Stirnende 14 des Rohres 1 anliegt. Der Kopf 21 überragt dabei das Rohr 1 seitlich, damit das Element 2 einfach wieder hochgezogen werden kann. Durch die Feder 3 wird das Element 2 sicher in der abgesenkten Stellung gehalten und auch bei allenfalls durch Verschmutzung erhöhter Reibung von der angehobenen in die abgesenkte Stellung gezogen.

Im Einsatz, z.B. auf einem Fussballfeld, werden die Vorrichtungen an den Messpunkten im Gelände senkrecht derart in den Boden getrieben, dass die Oberseite 25 des Kopfs 21 bei abgesenktem Element 2 annähernd bündig mit der Bodenoberfläche 26 ist. Wenn die Markierungen erneuert werden sollen, werden die entsprechenden Elemente 2 hochgezogen und in der angehobenen Stellung durch Verdrehen arretiert. Nun kann entweder zwischen zwei Elementen 2 eine Schnur gespannt werden, entlang welcher eine gerade Linie auf dem Boden markiert werden kann, oder es kann mit einer radial ausgestreckten Schnur um ein Element 2 herum eine kreisbogenförmige Linie markiert werden. Wenn die Markierung fertig ist, werden die Elemente 2 wieder so verdreht, dass sie in die abgesenkte Stellung gezogen werden. Die abgesenkten Köpfe 21 stören dann den Spielbetrieb in keiner Weise.

Mit der beschriebenen Vorrichtung brauchen die Messpunkte nur einmal vermessen zu werden. Das zeitaufwendige Neuvermessen und das Einschlagen und Entfernen von Stäben entfällt. Dadurch wird das Markieren des Spielfeldes rationalisiert.

Selbstverständlich ist die Vorrichtung nicht nur für die Markierung von Fussballfeldern, sondern allgemein für Sportfelder, aber auch z.B. für Helikopterlandeplätze, Flugplatzpisten oder im Tiefbau usw. einsetzbar.

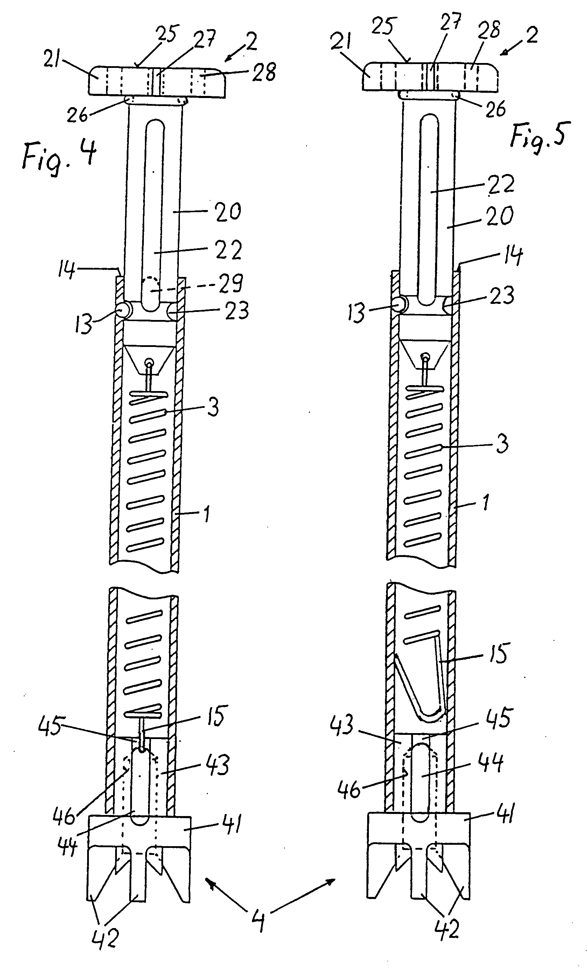

Bei den Ausführungsformen nach Figuren 4 und 5 sind analoge Teile mit gleichen Bezugzeichen versehen, sodass sich eine detaillierte Beschreibung dieser Teile erübrigt. Zum Einsetzen dieser Ausführungsformen in den Boden wird vorgängig z.B. mittels eines Locheisens ein Loch in den Boden getrieben. Die Vorrichtung wird anschliessend in diesem Loch verankert.

Bei beiden Ausführungformen ist ins untere Rohrende ein Bodenanker 4 aus Kunststoff, z.B. Polyamid eingepresst, dessen Kopf 41 einen grösseren Durchmesser hat als das Rohr 1. Dadurch wird verhindert, dass beim Hochziehen des Markierelementes 2 das Rohr 1 mit hochgezogen werden kann. Der Kopf 41 hat unten Zacken 42 zur sicheren Veranckerung im Erdreich. Der ins Rohr 1 eingepresste Schaft 43 hat einen Längsschlitz 44, der sich bis in den Kopf 41 erstreckt und oben in Längsnuten 45 übergeht. Der Längsschlitzt 44 mit den Nuten 45 stellt sicher, dass allenfalls ins Rohr 1 eingedrungenes Wasser ablaufen kann. Zusätzlich kann im Bodenanker 4 ein axiales Sackloch 46 eingeformt sein, das den Wasserabfluss nach unten noch verbessert.

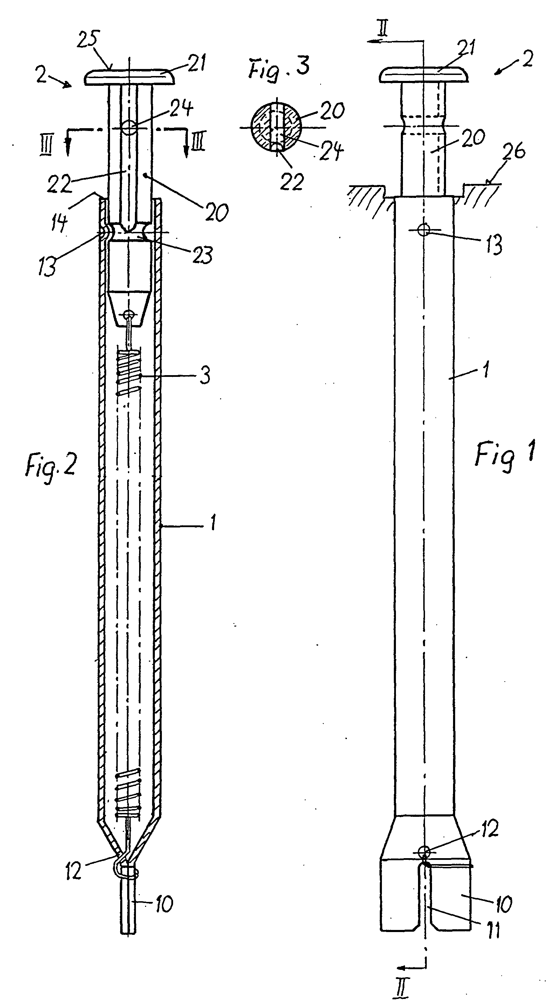

Statt der Körnung 13 gemäss Figuren 1 und 2 ist bei den Ausführungsformen nach Figuren 4 und 5 eine Kugel 13 aus nichtrostendem Stahl in eine entsprechende Querbohrung im Rohr 1 eingepresst und allenfalls verstemmt. Die Kugel 13 gewährleistet eine gute und schonende Führung in den Nuten 22, 23. Anliegend an den Kopf 21 ist in einer Nut des Schaftes 20 ein elastomerer O-Ring 26 eingesetzt. Bei abgesenktem Markierelement 2 dichtet dieser O-Ring 26 gegen die Oberseite 14 des Rohres 1 ab. Damit wird das Eindringen von Wasser und Schmutz verhindert. Der Kopf 21 hat über den Umfang gleichmässig verteilt vier Längsschlitzte 27, die innen in achsparallelen Durchgangsbohrungen 28 münden. Diese Längsschlitzte 27 und Bohrungen 28 ermöglichen ein rasches und präzises Fixieren der Markierschnur. Der Schaft 20 kann gegenüberliegend der Längsnut 22 eine weitere, jedoch kurze, von der Umfangsnut 23 ausgehende Längsnut 29 haben. Falls der Kopf 21 so gedreht wird, dass die Kugel 13 in dieser Nut 29 einrastet ist der Kopf 21 in der angehobenen Stellung gegen Verdrehen gesichert, was beim Spannen der Markierschnur von Vorteil sein kann.

Bei der Ausführungsform nach Figur 4 ist ein hackenförmiges, unteres Ende 15 der Feder 3 im Steg zwischen den beiden Längsnuten 45 eingehängt . Bei dieser Variante kann der Schaft 43 auch mit einem Gleitsitz im Rohr 1 sitzen. Bei der Ausführungsform nach Figur 5 ist das hackenförmige Ende 15 im Rohr 1 festgeklemt. Bei dieser Variante können der Schlitz 44 und die Nuten 45 auch weggelassen und dafür die Bohrung 46 als Durchgangsbohrung ausgebildet werden.

## Patentansprüche

1. Vorrichtung zum Markieren eines Messpunktes, gekennzeichnet durch ein in einen Boden (25) mindestens bis zu seinem Oberende (14) einzubringendes Rohr (1) und ein im Rohr (1) längs verschiebbares Markierelement (2), das zwischen einer abgesenkten Stellung, in welcher seine Oberseite (25) annähernd bündig mit dem Boden (26) ist, und einer angehobenen Stellung verschiebbar ist, in welcher es über den Boden (26) vorsteht, wobei das Markierelement (2) in seiner angehobenen Stellung arretierbar ist.

2. Vorrichtung nach Anspruch 1, wobei sie Mittel (13, 22, 23) aufweist, die ein Hochziehen des Markierelementes (2) über die angehobene Stellung hinaus verhindern.

3. Vorrichtung nach Anspruch 1 oder 2, wobei das Rohr (1) zumindest in einem oberen Abschnitt kreiszylindrisch ist, das Markierelement (2) einen im Rohr (1) geführten, kreiszylindrischen Schaft (20) hat und das Markierelement (2) in seiner angehobenen Stellung durch einen Bajonettverschluss (13, 22, 23) arretierbar ist.

4. Vorrichtung nach Anspruch 3, wobei der Schaft (20) mindestens eine Längsnut (22) oder einen Längsschlitzt hat, die bzw. der beabstandet vom unteren Ende des Schaftes (20) in eine in Umfangsrichtung verlaufende Nut (23) übergeht, und in welche bzw. welchen ein vom Rohr (1) nach innen abstehendes Element (13) eingreift, insbesondere eine Körnung oder ein in eine Querbohrung eingesetzter Körper.

5. Vorrichtung nach einem der Ansprüche 1-4, wobei das Markierelement (2) durch eine vorgespannte Feder (3) gegen die abgesenkte Stellung vorbelastet ist.

6. Vorrichtung nach einem der Ansprüche 1-5, wobei das Markierelement (2) einen Kopf (21) hat, der seitlich über das Rohr (1) vorsteht, und welcher in der abgesenkten Stellung an der oberen Stirnfläche (14) des Rohres (1), insbesondere unter Zwischenlage eines O-Rings (26) anliegt.

7. Vorrichtung nach einem der Ansprüche 1-6, wobei das Rohr (1) unten verjüngt ist, insbesondere durch eine Abflachung (10), und wobei es benachbart dem unteren Ende mindestens eine seitliche Oeffnung (12) aufweist.

8. Vorrichtung nach einen der Ansprüche 1-6, wobi am untere Rohrende ein Bodenanker (4) angebracht ist, dessen Breite grösset ist als der Durchmesser des Rohres (1), wobei der Bodenanker (4) vorzugsweise aus Kunststoff besteht, insbesonder aus Polyamid.

9. Vorrichtung nach einem der Ansprüche 1-8, wobei das Markierelement (2) aus Kunststoff, insbesondere aus Polyamid besteht.

10. Vorrichtung nach einem der Ansprüche 1-9, wobei das Markierelement (2) einen Scheibenförmigen Kopf (21) hat, dessen Durchmesser grösser ist als jener des Rohres (1), und der an seiner Peripherie vier gleichmässig über den Umfang verteilte Längsschlitze (27) zum Spannen einer Markierschnur aufweist.

## Claims

1. Apparatus for marking a measuring point, characterized by a tube (1), which is to be introduced at least up to its top end (14) into a ground (26), and by a marking element (2), which is longitudinally displaceable in the tube (1) and is displaceable between a lowered position, in which its top end (25) is approximately flush with the ground (26), and a raised position, in which it projects beyond the ground (26), wherein the marking element (2) is lockable in its raised position.

2. Apparatus according to claim 1, wherein it comprises means (13, 22, 23) of preventing the marking element (2) from being pulled up beyond the raised position.

3. Apparatus according to claim 1 or 2, wherein the tube (1) at least in an upper portion is circular-cylindrical, the marking element (2) has a circular-cylindrical shank (20) guided in the tube (1), and the marking element (2) is lockable in its raised position by means of a bayonet catch (13, 22, 23).

4. Apparatus according to claim 3, wherein the shank (20) has at least one longitudinal groove (22) or longitudinal slot, which at a distance from the bottom end of the shank (20) changes into a circumferentially extending groove (23) and into which an element (13) projecting inwards from the tube (1), in particular a dimple or a body inserted into a transverse bore, engages.

5. Apparatus according to one of claims 1-4, wherein the marking element (2) is preloaded towards the lowered position by a pretensioned spring (3).

6. Apparatus according to one of claims 1-5, wherein the marking element (2) has a head (21), which projects laterally beyond the tube (1) and which in the lowered position rests against the top end face (14) of the tube (1), in particular with the interposition of an O-ring (26).

7. Apparatus according to one of claims 1-6, wherein the tube (1) at the bottom is tapered, in particular by means of a flattened portion (10), and has at least one lateral opening (12) adjacent to the bottom end.

8. Apparatus according to one of claims 1-6, wherein attached to the bottom tube end is a ground anchor (4), the width of which is greater than the diameter of the tube (1), wherein the ground anchor (4) is preferably made of plastics material, in particular of polyamide.

9. Apparatus according to one of claims 1-8, wherein the marking element (2) is made of plastics material, in particular of polyamide.

10. Apparatus according to one of claims 1-9, wherein the marking element (2) has a disk-shaped head (21), the diameter of which is greater than that of the tube (1) and which at its periphery has four longitudinal slots (27) distributed uniformly over the circumference for tensioning a marking string.

## Revendications

1. Dispositif pour marquer un point de mesure, caractérisé par un tube (1) devant être introduit dans un sol (26) au moins jusqu'à son extrémité supérieure (14), et un élément de marquage (2), qui peut être déplacé longitudinalement dans le tube (1) et qui est déplaçable entre une position abaissée, dans laquelle sa face supérieure (25) est approximativement de niveau avec le sol (26), et une position soulevée, dans laquelle l'élément de marquage fait saillie au-dessus du sol (26), l'élément de marquage (2) pouvant être bloqué dans sa position soulevée.

2. Dispositif selon la revendication 1, qui comporte des moyens (13, 22, 23), qui empêchent un soulèvement de l'élément de marquage (2) au-dessus de la position soulevée.

3. Dispositif selon la revendication 1 ou 2, dans lequel le tube (1) possède une forme de cylindre circulaire au moins dans une partie supérieure, l'élément de marquage (2) possède une tige en forme de cylindre circulaire (20), guidé dans le tube (1), et l'élément de marquage (2) peut être bloqué dans sa position soulevée au moyen d'un système de fermeture à baïonnette(13, 22, 23).

4. Dispositif selon la revendication 3, dans lequel la tige (20) possède au moins une rainure longitudinale (22) ou une fente longitudinale, qui rejoint, à distance de l'extrémité inférieure de la tige (20), une gorge (23) qui s'étend dans la direction circonférentielle et dans laquelle s'engage un élément (13) qui fait saillie vers l'intérieur à partir du tube (1), notamment un bossage ou un corps inséré dans un perçage transversal.

5. Dispositif selon l'une des revendications 1-4, dans lequel l'élément de marquage (2) est précontraint, par un ressort précontraint (3), vers la position abaissée.

6. Dispositif selon l'une des revendications 1-5, dans lequel l'élément de marquage (2) possède une tête (21), qui fait saillie latéralement au-delà du tube (1) et qui, dans la position abaissée, s'applique contre la surface frontale supérieure (14) du tube (1), notamment moyennant le montage intercalé d'un joint torique (26).

7. Dispositif selon l'une des revendications 1-6, caractérisé en ce que le tube (1) se rétrécit vers le bas, en particulier au moyen d'un méplat (10), et dans lequel le tube possède, au voisinage de l'extrémité inférieure, au moins une ouverture latérale (12).

8. Dispositif selon l'une des revendications 1-6, dans lequel sur l'extrémité inférieure du tube est monté un élément (4) d'ancrage dans le sol, dont la largeur est supérieure au diamètre du tube (1), l'élément (4) d'ancrage dans le sol étant réalisé de préférence en une matière plastique, notamment en polyamide.

9. Dispositif selon l'une des revendications 1-8, dans lequel l'élément de marquage (2) est formé d'une matière plastique, notamment de polyamide.

10. Dispositif selon l'une des revendications 1-9, dans lequel l'élément de marquage (2) possède une tête en forme de disque (21), dont le diamètre est supérieur à celui du tube (1) et qui possède, sur sa périphérie, quatre fentes longitudinales (27) réparties de façon uniforme sur la périphérie et servant à appliquer une contrainte à un cordon de marquage.
